# EUROPEAN PATENT APPLICATION

(11) **EP 3 270 450 A1**
(43) Date of publication of application: **17.01.2018**
(21) Application number: 16761293.6
(22) Date of filing: 04.03.2016
(51) Int. Cl.: H01M 8/0202, H01M 8/24, H01M 8/12

(54) **FUEL CELL STACK**

(30) Priority: 09.03.2015 JP 2015046180
(71) Applicant: NGK Spark Plug Co., Ltd., Nagoya-shi, Aichi 467-8525 (JP)
(72) Inventor: HOTTA, Nobuyuki, Nagoya-shi Aichi 467-8525 (JP); YAGI, Hiroaki, Nagoya-shi Aichi 467-8525 (JP); MORIKAWA, Tetsuya, Nagoya-shi Aichi 467-8525 (JP)
(74) Representative: J A Kemp
(86) International application number: PCT/JP2016/001205
(87) International publication number: WO 2016/143318

(57) **Abstract**

The present invention provides a fuel cell stack which can provide enhanced performance through employment of such an electricity outputting structure as to reduce a voltage loss. In a fuel cell stack 1, a connection region SR in which a protrusion 67 of a current collecting plate 9 and a second output terminal 15 are electrically connected is formed within a belt-like range (i.e., a connectable range SKH) between a first tangential line L1 tangential to the circumference of one through hole 10c and a second tangential line L2 tangential to the circumference of the other through hole 10d. Therefore, since the flow of electricity (electric current) generated in the fuel cell stack 1 is unlikely to be obstructed by the through holes 10, electricity is easily supplied to the second output terminal 15 from a current collecting section 65 of the current collecting plate 9 through the protrusion 67. As a result, a voltage loss is small, thereby improving the performance of the fuel cell stack 1.

## Description

### TECHNICAL FIELD

The present invention relates to a fuel cell stack which includes a plurality of single fuel cells each having a solid electrolyte provided with a cathode and an anode.

### BACKGROUND ART

A conventionally known fuel cell apparatus is, for example, a solid oxide fuel cell (SOFC) apparatus which uses solid electrolyte (solid oxide).

The solid oxide fuel cell apparatus uses, for example, a planar single fuel cell having a flat-plate-like anode provided on one side of a flat-plate-like solid electrolyte and in contact with fuel gas, and a flat-plate-like oxidizer electrode (cathode) provided on the other side of the solid electrolyte and in contact with oxidizer gas (e.g., air).

Further, in recent years, in order to obtain an intended voltage, there has been developed a fuel cell stack in which a plurality of single fuel cells are stacked with interconnectors and current collectors intervening therebetween.

In the fuel cell stack of such a type, according to a proposed structure for outputting electricity, electrically conductive end plates are disposed at respective opposite ends with respect to the stacking direction of the single fuel cells and function as positive and negative poles of the fuel cell stack.

According to such a type of disclosed electricity output structure of the fuel cell stack, output members are brought in surface contact with the respective end plates by respective tie bolts used to clamp component members of the fuel cell stack so as to output electricity, or electricity is output from output members formed integrally with the respective end plates at the positions of the tie bolts (see Patent Document 1).

Meanwhile, in order to prevent a short circuit between the fuel cell stack and various auxiliary devices (BOP), there is proposed a technique for providing an electrical insulation between the end plates and a stack assembly (a stack body) of the single fuel cells, etc., (see Patent Document 2).

According to this technique, insulating plates formed of mica or the like are disposed between the stack body and the end plates for providing an electrical insulation therebetween. Also, in order to output electricity from the stack body, current collecting plates are disposed internally of the insulating plates (on a stack body side). Further, in order to be connected to an external output terminal, the current collecting plates have respective protrusions protruding outward from a side surface of the fuel cell stack.

### PRIOR ART DOCUMENTS

### PATENT DOCUMENTS

Patent Document 1: Japanese Patent Application Laid-Open (*kokai*) No. 2011-76890
Patent Document 2: International Publication No. WO2006/009277

### SUMMARY OF THE INVENTION

### PROBLEM TO BE SOLVED BY THE INVENTION

However, the above-mentioned conventional techniques have failed to sufficiently study the structure of an output member; as a result, in some cases, a voltage loss has been involved in outputting electricity to external equipment.

Specifically, a voltage loss has increased depending on structural features of an output member, such as disposition and shape of the output member, resulting in deterioration in performance of the fuel cell stack.

The present invention has been conceived in view of the above problem, and an object of the invention is to provide a fuel cell stack which can provide enhanced performance through employment of such an electricity outputting structure as to reduce a voltage loss.

### MEANS FOR SOLVING THE PROBLEM

(1) According to a first mode of the present invention, in a fuel cell stack comprising an electricity generation unit including a single fuel cell having an anode, a cathode, and a solid electrolyte, and a current collecting plate for collecting, through a current collector, electricity generated by the single fuel cell, a plurality of the electricity generation units being disposed continuously, and the current collecting plate being disposed in a first direction in which the electricity generation units are continuous with one another, as viewed from the first direction, the current collecting plate has a current collecting section disposed in a region in which the electricity generation units lie on top of one another, and a protrusion protruding from the current collecting section; the current collecting section has a current collecting area in which the current collector is disposed, and a plurality of through holes including a first through hole and a second through hole located adjacent to each other; the protrusion has a connection region to which an output terminal for outputting electricity generated in the fuel cell stack from the fuel cell stack is connected; and the connection region is present between a first tangential line tangential to a circumference of the first through hole and perpendicular to a line segment which connects a centroid of the first through hole and a centroid of the second through hole, and a second tangential line tangential to a circumference of the second through hole and perpendicular to the line segment.

In the first mode, the current collecting section of the current collecting plate has the current collecting area in which the current collector is disposed, and a plurality of the through holes including the adjacent first through hole and second through hole. Also, the protrusion has the connection region to which is connected the output terminal for outputting electricity generated in the fuel cell stack from the fuel cell stack.

The connection region is present between the first tangential line tangential to the circumference of the first through hole and perpendicular to the line segment which connects the centroid of the first through hole and the centroid of the second through hole, and the second tangential line tangential to the circumference of the second through hole and perpendicular to the line segment.

That is, in the first mode, the connection region in which the protrusion and the output terminal are electrically connected is formed within a range (i.e., a connectable range to be described later) between the first tangential line tangential to the circumference of the first through hole and the second tangential line tangential to the circumference of the second through hole. In other words, the connection region is determined such that the flow of electric current between the current collecting area and the connection region is unlikely to be obstructed by the through holes.

As mentioned above, in the first mode, since the flow of electricity (accordingly, electric current) generated in the fuel cell stack is unlikely to be obstructed by the through holes, electricity is efficiently supplied to the output terminal from the current collecting section of the current collecting plate. Thus, there is yielded a marked effect that the performance of the fuel cell stack can be improved by virtue of low voltage loss.

Also, since the protrusion having the thus-determined connection region can be formed compact, there is an advantage that heat transfer from a section (e.g., the stack body) in which the electricity generation units are disposed continuously can be restrained.

(2) In a second mode of the present invention, the output terminal is formed of a member lower in electric resistance than the current collecting plate.
   In the case where the output terminal lower in resistance than the current collecting plate is connected, electric current flows toward the connection. In the second mode, since the electric resistance of the output terminal is lower than that of the current collecting plate, a voltage loss is small, whereby the performance of the fuel cell stack is improved.
(3) In a third mode of the present invention, as viewed from the first direction, the entire connection region is disposed between the first tangential line and the second tangential line.
   In the third mode, since the entire connection region is disposed between the first tangential line and the second tangential line, electric current flows more easily from the current collecting section to the output terminal. Therefore, a voltage loss is small, whereby the performance of the fuel cell stack can be improved.
(4) In a fourth mode of the present invention, as viewed from the first direction, a width of the protrusion on a proximal side with respect to a protruding direction is greater than a width of the protrusion on a distal side with respect to the protruding direction.
   In the fourth mode, since the protrusion is such that with respect to the protruding direction, the width on the proximal side is greater than the width on the distal side, electric current flows easily from the current collecting section to the protrusion. Accordingly, electric current flows easily to the output terminal. Also, there is an advantage that the protrusion is high in strength on the proximal side and is thus unlikely to break.
(5) In a fifth mode of the present invention, as viewed from the first direction, the width of the protrusion increases gradually toward the proximal side.

In the fifth mode, since the width of the protrusion increases gradually toward the proximal side, electric current flows easily from the current collecting section to the protrusion. Accordingly, electric current flows easily to the output terminal. Also, there is an advantage that the protrusion is high in strength to a greater extent on the proximal side and is thus less likely to break.

### <Next, the structural features of the fuel cell stack of the present invention will be described.>

• The term "centroid" means the center of gravity (planar center) of a plane figure.
• Usable materials for the current collecting plate are stainless steel, nickel, nickel alloys, etc.
   • Usable materials for the output terminal are stainless steel, nickel, nickel alloys, etc.
   • No particular limitation is imposed on the shape of the electricity generation unit so long as the shape is suited for stacking (suited for disposition in stack), such as a planar shape or a flattened shape.
   • The electricity generation unit is a basic unit which generates electricity by use of the single fuel cell. The electricity generation unit includes the single fuel cell, structural members for outputting electricity from the single fuel cell (e.g., a cathode current collector, an anode current collector, an interconnector, etc.), and members for defining flow channels for oxidizer gas and fuel gas.
   • In the case of employment of a single current collector, the current collecting area is a projected region of the current collector as viewed from the first direction. In the case of employment of a plurality of current collectors, the current collecting area is a region formed by connecting the outer boundaries of projected regions of the current collectors as viewed from the first direction; for example, a region whose outer boundary surrounds all of the projected regions of the current collectors.
   • A region in which the through holes are disposed is, for example, a frame-like region which surrounds the current collecting area (i.e., a frame-like peripheral portion of the current collecting plate).
   • The shape (a shape as viewed from the first direction, or a shape in plan view) of a distal end portion of the output terminal in the connection region is, for example, a portion of a polygon such as a short-side portion of a rectangle, or a smooth arc.
   • A method of electrically connecting the protrusion and the output terminal is, for example, a method of connecting the protrusion and the output terminal by use of fixing members such as a bolt and a nut, or a method of joining the protrusion and the output terminal by welding or the like.
   • Materials used in generating electricity in the fuel cell stack are fuel gas and oxidizer gas. Fuel gas indicates gas which contains a reducing agent (e.g., hydrogen) as fuel, and oxidizer gas indicates gas (e.g., air) which contains an oxidizer (e.g., oxygen).
   • In generating electricity in the fuel cell stack, fuel gas is introduced into an anode side, and oxidizer gas is introduced into a cathode side.

### BRIEF DESCRIPTION OF THE DRAWINGS

[FIG. 1] Perspective view of a fuel cell stack of embodiment 1.
[FIG. 2] Partially eliminated schematic sectional view of the fuel cell stack of embodiment 1 taken along a stacking direction.
[FIG. 3] Exploded perspective view showing an electricity generation unit of the fuel cell stack of embodiment 1.
[FIG. 4] Plan view showing a surface of an interconnector of embodiment 1 on which cathode current collectors are formed.
[FIG. 5] Perspective view showing an anode current collector of embodiment 1 and accompanied by an enlarged view of its essential portions.
[FIG. 6(a)] Plan view showing a current collecting plate of embodiment 1.
[FIG. 6(b)] Explanatory view showing a state in which a second output terminal is connected to the current collecting plate.
[FIG. 7] Front view showing a state in which the second output terminal is connected to a protrusion of the current collecting plate at a portion of the fuel cell stack of embodiment 1.
[FIG. 8] Explanatory view showing, in plan view, a connection region and other ranges at a portion of the current collecting plate of embodiment 1.
[FIG. 9(a)] Plan view showing a portion of a current collecting plate of embodiment 2.
[FIG. 9(b)] Plan view showing a portion of a modified current collecting plate of embodiment 2.
[FIG. 9(c)] Plan view showing a portion of a second output terminal connected to a current collecting plate of embodiment 3.
[FIG. 9(d)] Plan view showing a portion of a modified second output terminal connected to the current collecting plate of embodiment 3.
[FIG. 10(a)] Plan view showing a portion of a current collecting plate of embodiment 4.
[FIG. 10(b)] Plan view showing a portion of a modified current collecting plate of embodiment 4.
[FIG. 11] Partially eliminated schematic sectional view of a fuel cell stack of embodiment 5 taken along the stacking direction.
[FIG. 12] Front view showing a state in which the second output terminal is connected to a protrusion of a current collecting plate at a portion of a fuel cell stack of embodiment 6.
[FIG. 13] Schematic perspective view partially showing another fuel cell stack.
[FIG. 14] Plan view showing a state in which the second output terminal is connected to a current collecting plate of still another fuel cell stack.

### MODES FOR CARRYING OUT THE INVENTION

A fuel cell stack to which the present invention is applied will next be described while referring to a solid oxide fuel cell stack.

### Embodiment 1

a) First, the schematic structure of a fuel cell stack of the present embodiment 1 will be described.

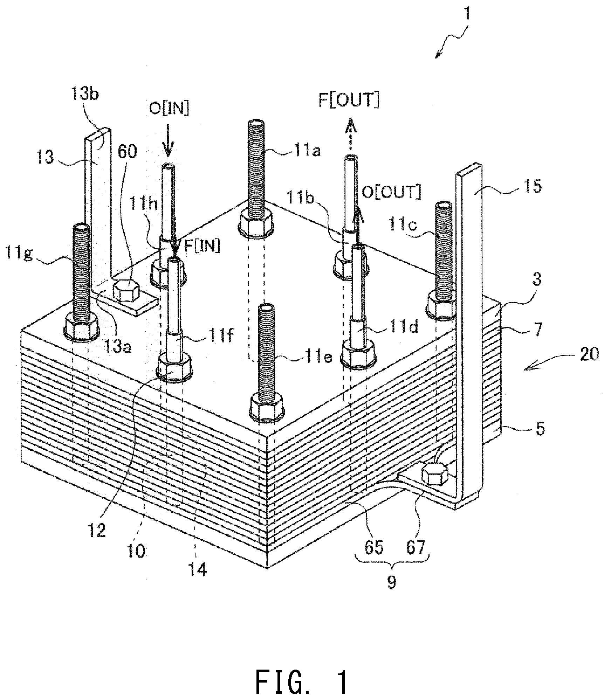

As shown in FIG. 1, a solid oxide fuel cell stack (hereinafter, referred to merely as "fuel cell stack") 1 of the present embodiment 1 is an apparatus for generating electricity by use of fuel gas (e.g., hydrogen) and oxidizer gas (e.g., air, more specifically oxygen contained in air) supplied thereto.

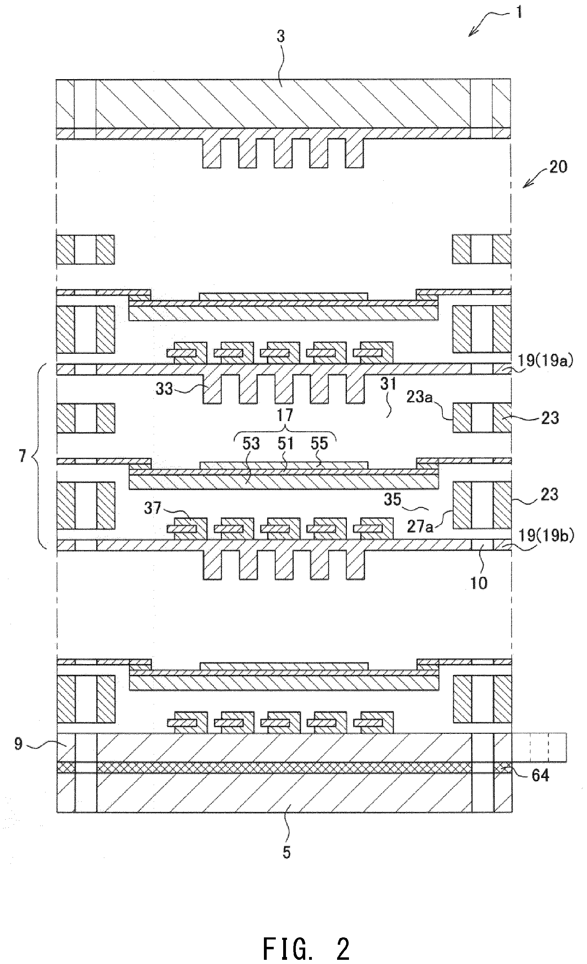

In the drawings, oxidizer gas is denoted by "O," and fuel gas is denoted by "F." Also, "IN" indicates that gas is introduced, and "OUT" indicates that gas is discharged. The up and down directions in the fuel cell stack 1 indicate, for convenience' sake, the vertical direction in FIGS. 1 and 2 and do not specify orientation of the fuel cell stack 1.

The fuel cell stack 1 in the present embodiment 1 is a stack of a first end plate 3 and a second end plate 5 disposed at opposite ends in the vertical direction (a stacking direction, or a first direction) of FIG. 1 (i.e., at upper and lower ends), a plurality of (e.g., 20) planar electricity generation units 7 disposed between the end plates 3 and 5, a current collecting plate 9 to be described later, etc.

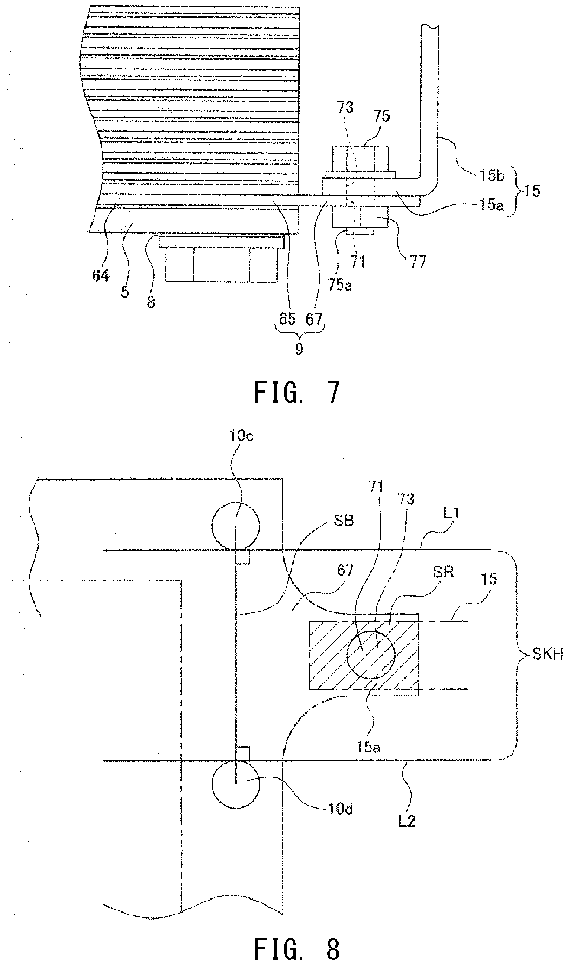

The upper and lower end plates 3 and 5, the electricity generation units 7, the current collecting plate 9, etc., have a plurality of (e.g., eight) through holes 10 extending therethrough in the stacking direction. The two end plates 3 and 5, the electricity generation units 7, the current collecting plate 9, etc., are unitarily fixed by bolts 11a, 11b, 11c, 11d, 11e, 11f, 11g, and 11h (collectively referred to as bolts 11) disposed in the respective through holes 10, and nuts 12 threadingly engaged with the respective bolts 11 with insulators 8 (see FIG. 7) intervening between the nuts 12 and the end plates 3 and 5.

Of the bolts 11, the particular (four) bolts 11b, 11d, 11f, and 11h have an inner flow channel 14 formed therein along the axial direction (the vertical direction in FIG. 1) and through which oxidizer gas or fuel gas flows. The bolt 11b is used for discharge of fuel gas; the bolt 11d is used for discharge of oxidizer gas; the bolt 11f is used for introduction of fuel gas; and the bolt 11h is used for introduction of oxidizer gas.

In order to output electricity from the fuel cell stack 1, as will be described later in detail, a first output terminal 13 is connected to the upper first end plate 3, and a second output terminal 15 is connected to a current collecting plate 9 located on a lower side.

Hereinafter, an assembly of the stacked electricity generation units 7 is called a stack body 20.
b) Next, the structures of the electricity generation unit 7, etc., will be described in detail.

Notably, in FIGS. 2 to 5, for easy understanding of the structure of the fuel cell stack 1, the vertical and horizontal scales are selected as appropriate, and the number of members is also selected as appropriate.

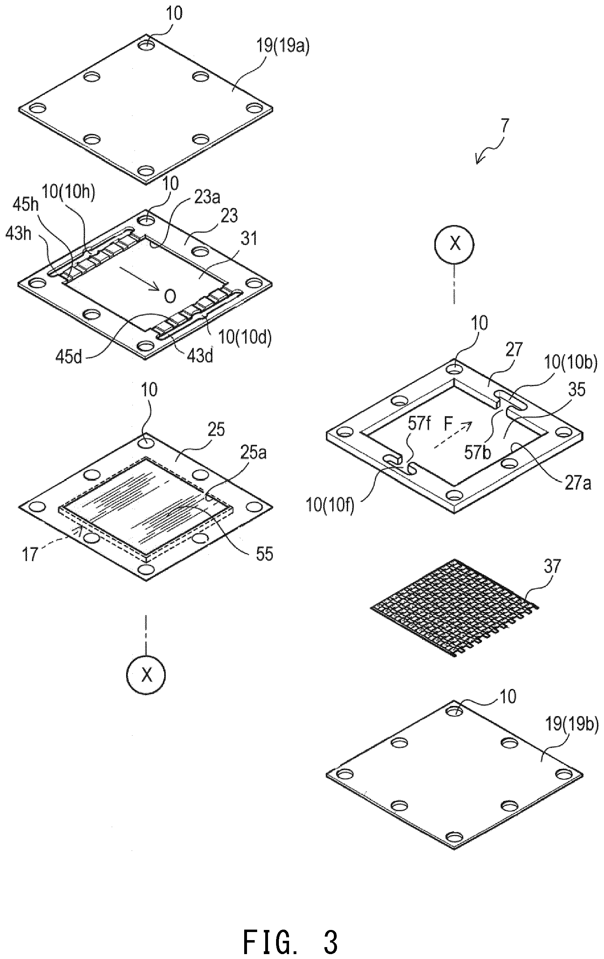

As schematically shown in FIGS. 2 and 3, the electricity generation unit 7 is configured such that interconnectors 19a and 19b (collectively referred to as interconnectors 19), etc., are disposed at opposite sides with respect to a thickness direction of a single fuel cell 17 (the vertical direction in FIG. 2). Notably, the bottom electricity generation unit 7 on the second end plate 5 side (on the bottom side in FIG. 2) of the fuel cell stack 1 differs somewhat in structure from the other electricity generation units 7 as will be described in detail later.

Specifically, the electricity generation units 7 (other than the bottom electricity generation unit 7) are configured such that the metal interconnector 19a, a cathode insulating frame 23, a metal separator 25, a metal anode frame 27, the metal interconnector 19b, etc., are stacked. In the fuel cell stack 1, the adjacent electricity generation units 7 use the interconnector 19 disposed therebetween in common. The stacked members 19 and 23 to 27 have the through holes 10 formed therein for allowing the respective bolts 11 to be inserted through the respective through holes 10.

As will be described later, the single fuel cell 17 is joined to the separator 25. Cathode current collectors 33 formed integrally with the interconnector 19 in a protruding manner (see FIG. 2) are disposed in a flow channel (an air flow channel in which oxidizer gas flows) 31 within the cathode insulating frame 23. An anode current collector 37 is disposed in a flow channel (a fuel flow channel in which fuel gas flows) 35 within the anode frame 27.

In the fuel cell stack 1, the adjacent electricity generation units 7 use the interconnector 19 disposed therebetween in common.

The components will next be described in detail.

### <Interconnector 19>

The interconnector 19 is formed of an electrically conductive plate material (e.g., a metal plate of stainless steel such as SUS430). The interconnector 19 secures electrical conduction between the single fuel cells 17 and prevents the mixing of gases between the single fuel cells 17 (accordingly, between the electricity generation units 7). A single interconnector 19 suffices for disposition between the adjacent single fuel cells 17.

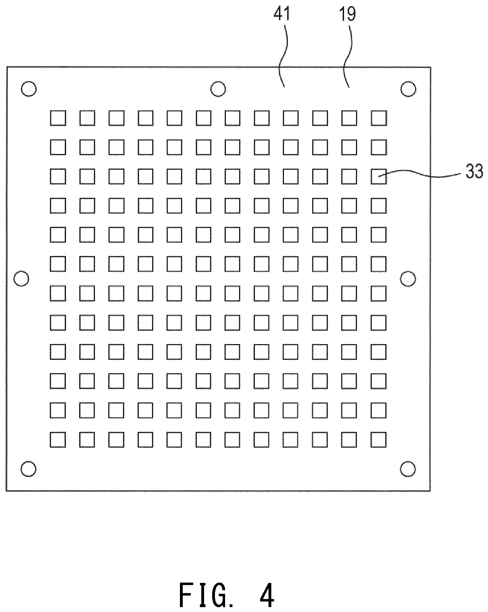

As shown in FIG. 4, the interconnector 19 includes a plate portion 41, which is a quadrate plate material, and a large number of the cathode current collectors 33 formed on one side of the plate portion 41, specifically on the surface which faces a cathode 55 (see FIG. 2).

The cathode current collectors 33 are embodied in the form of blocks (rectangular parallelepipeds) protruding from the plate portion 41 toward the cathode 55 and are disposed in lattice arrangement.

### <Cathode insulating frame 23>

Referring back to FIG. 3, the cathode insulating frame 23 is an electrically insulative plate material in the form of a quadrate frame; specifically, a mica frame formed of soft mica. The cathode insulating frame 23 has a quadrate opening portion 23a formed at a central portion (in plan view as viewed from the thickness direction) and partially constituting the air flow channel 31.

The cathode insulating frame 23 has elongated communication holes 43d and 43h formed respectively in the side frame portions in which the two mutually facing through holes 10 (10d and 10h) are formed respectively, and communicating with the respective through holes 10. The cathode insulating frame 23 further has a plurality of grooves 47d and 47h serving as air passage portions (communication portions) for establishing communication between the opening portion 23a and the communication holes 45d and 45h.

### <Separator 25>

The separator 25 is an electrically conductive plate material (e.g., a metal plate of stainless steel such as SUS430) in the form of a quadrate frame. An outer peripheral portion (of the upper surface) of the single fuel cell 17 is joined by brazing to an inner peripheral portion (of the lower surface) along a central quadrate opening portion 25a of the separator 25. That is, the single fuel cell 17 is joined in such a manner as to close the opening portion 25a of the separator 25.

### <Anode frame 27>

The anode frame 27 is an electrically conductive plate material having the form of a quadrate frame and formed of, for example, stainless steel such as SUS430. The anode frame 27 has a quadrate opening portion 27a formed at a central portion (in plan view) and partially constituting the fuel flow channel 35.

The anode frame 27 has the two mutually facing through holes 10 (10b and 10f) in the form of elongated holes, and communication holes 57b and 57f for establishing communication between the opening portion 27a and the elongated holes.

### <Anode current collector 37>

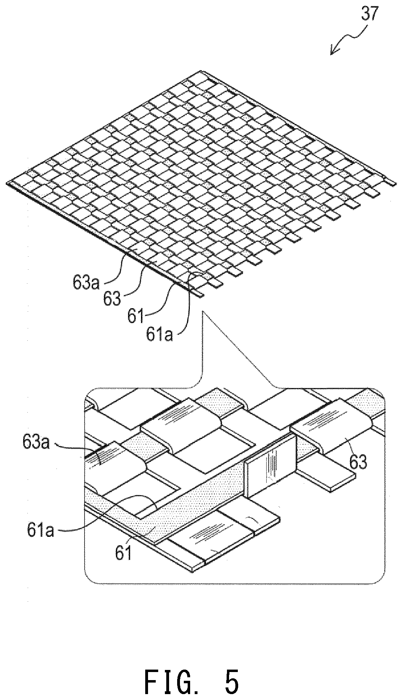

As shown in FIG. 5, the anode current collector 37 is a publicly known latticed member (see, for example, a current collector 19 described in Japanese Patent Application Laid-Open (*kokai*) No. 2013-55042) in which a spacer 61, which is a core member of mica, and an electrically conductive plate of metal (e.g., a foil of nickel having a flat plate shape) 63 are combined.

More specifically, the anode current collector 37 is composed of the spacer (ladder mica) 61 having a large number of elongated holes 61a formed parallelly therein, and an electrically conductive plate 63 whose joint pieces 63a are bent to be attached to the spacer 61.

### <Single fuel cell 17>

Referring back to FIG. 2, the single fuel cell 17 has a so-called anode support membrane type structure and is configured such that a membrane of solid electrolyte (solid electrolyte layer) 51, an anode 53 formed on one side (the lower side in FIG. 2) of the solid electrolyte layer 51, and a membrane of cathode 55 formed on the other side (the upper side in FIG. 2) of the solid electrolyte layer 51 are laminated together.

Since the separator 25 is joined to the upper surface of an outer peripheral portion of the solid electrolyte layer 51, the separator 25 separates the air flow channel 31 and the fuel flow channel 35 to prevent mixing of oxidizer gas and fuel gas within the electricity generation unit 7.

The air flow channel 31 is provided on the cathode 55 side of the single fuel cell 17; the fuel flow channel 35 is provided on the anode 53 side of the single fuel cell 17; air flows in the air flow channel 31 in the horizontal direction of FIG. 2; and fuel gas flows in the fuel flow channel 35 in a direction perpendicular to paper on which FIG. 2 appears.

The structure of the single fuel cell 17 will be further described in detail.

The cathode 55 is a porous layer through which oxidizer gas can pass.

Materials used to form the cathode 55 include metals, metal oxides, and complex oxides of metals. The metals include Pt, Au, Ag, Pd, Ir, and Ru and alloys of the metals. The oxides of metals include oxides of La, Sr, Ce, Co, Mn, and Fe such as La₂O₃, SrO, Ce₂O₃, Co₂O₃, MnO₂, and FeO.

The usable complex oxides are those which contain La, Pr, Sm, Sr, Ba, Co, Fe, Mn, etc., (La₁₋ₓSrₓCoO₃ complex oxide, La₁₋ₓSrₓFeO₃ complex oxide, La₁₋ₓSrₓCo_{1-y}FeyO₃ complex oxide, La₁₋ₓSrₓMnO₃ complex oxide, Pr₁₋ₓBaₓCoO₃ complex oxide, Sm₁₋ₓSrₓCoO₃ complex oxide, etc.).

The solid electrolyte layer 51 is a dense layer formed of a solid oxide and has ion conductivity so that oxidizer gas (oxygen) to be introduced into the cathode 55 can be moved in the form of ions in the course of operation (generation of electricity) of the fuel cell stack 1.

Materials used to form the solid electrolyte layer 51 include, for example, zirconia-based, ceria-based, and perovskite-type electrolyte materials. Zirconia-based materials include yttria-stabilized zirconia (YSZ), scandia-stabilized zirconia (ScSZ), and calcia-stabilized zirconia (CaSZ). Generally, yttria-stabilized zirconia (YSZ) is used in many cases. A ceria-based material to be used is so-called rare earth element-added ceria. A perovskite-type material to be used is a lanthanum element-containing perovskite-type compound oxide.

The anode 53 is a porous layer through which fuel gas can pass.

Materials used to form the anode 53 include, for example, mixtures of metals such as Ni and Fe and ceramics such as ZrO₂ ceramics, such as zirconia stabilized by at least one of rare earth elements such as Sc and Y, and CeO ceramics. Also, metals such as Ni, cermets of Ni and the ceramics, and Ni-based alloys can be used.

c) Next will be described a structure for outputting electricity from the fuel cell stack 1 at opposite end portions in the stacking direction of the fuel cell stack 1.

### <Structure on first end plate 3 side>

As shown in FIG. 2, in the top electricity generation unit 7 of the fuel cell stack 1, the first end plate 3 is disposed on the upper surface of the upper interconnector 19a, the first end plate 3 being a plate material which has a planar shape (specifically, a peripheral shape) similar to that of the interconnector 19a in plan view. The first end plate 3 is formed of a material similar to that used to form the interconnector 19.

As shown in FIG. 1, the first output terminal (an output terminal of positive electrode) 13 is fixed to the upper surface of the first end plate 3 with a bolt 60.

Specifically, the first output terminal 13 is an L-shaped plate material which is bent to have a distal end portion 13a and an extending portion 13b perpendicular to each other, and the distal end portion 13a is fixed to the first end plate 3 with the bolt 60.

The first output terminal 13 is formed of a material lower in resistance than the interconnector 19a and the first end plate 3; for example, nickel or a nickel alloy.

By this structure, the top interconnector 19a, the first end plate 3, and the first output terminal 13 are electrically connected.

### <Structure on second end plate 5 side>

As shown in FIG. 2, in the bottom electricity generation unit 7 of the fuel cell stack 1, in place of the above-mentioned interconnector 19b, the current collecting plate 9 is disposed in contact with the lower surfaces of the anode frame 27 and the anode current collector 37.

An end insulating plate 64 is disposed under the current collecting plate 9, and the second end plate 5 is disposed under the end insulating plate 64.

The end insulating plate 64 is a plate material which is formed of mica as in the case of the cathode insulating frame 23 and which has a planar shape (specifically, a peripheral shape) similar to that of the interconnector 19 in plan view. The second end plate 5 is a member formed of a material similar to that of the first end plate 3 and having a planar shape (specifically, a peripheral shape) similar to that of the first end plate 3.

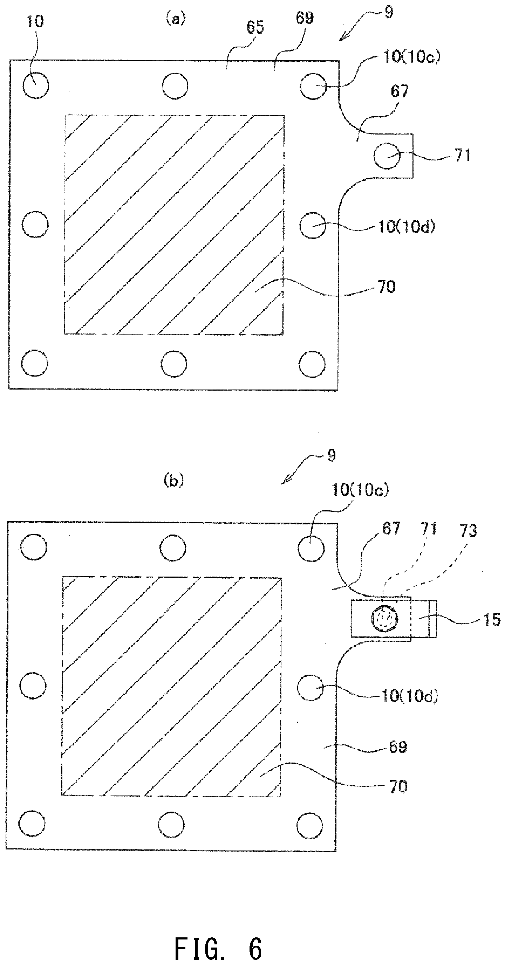

As shown in FIG. 6(a), the above-mentioned current collecting plate 9 includes a current collecting section 65 having the same planar shape (quadrate) as that of the stack body 20, and a protrusion 67 protruding outward from the periphery of the current collecting section 65 (accordingly, from the periphery of the stack body 20 in plan view). The current collecting plate 9 is formed of a material similar to that of the interconnector 19.

Similar to the anode frames 27, etc., the current collecting section 65 has the through holes 10 through which the bolts 11 are inserted and which are formed in a quadrate-frame-like peripheral portion 69 at eight equally spaced positions (i.e., at four corners of the peripheral portion 69 and at midpoints therebetween).

That is, the current collecting section 65 is disposed in a region in which the electricity generation units 7 lie on top of one another in plan view, and has a quadrate current collecting area 70 (a hatched area in FIG. 6) which is formed internally of the peripheral portion 69 and on which the anode current collector 37 is disposed.

As shown in FIG. 6(b), the protrusion 67 protrudes outward from one side (right side) of the periphery of the peripheral portion 69 at a position between two adjacent through holes 10 (e.g., through holes 10c and 10d). That is, the protrusion 67 protrudes outward from the right side of the periphery of the peripheral portion 69 perpendicularly to the right side at a position between the through holes 10c and 10d. The protrusion 67 has a protrusion through hole 71 formed in a distal end portion.

Further, as shown in FIG. 7, the protrusion 67 and the second output terminal 15 are connected by a bolt 75 and a nut 77.

The second output terminal 15 is an L-shaped plate material composed of a distal end portion 15a and an extension portion 15b which are formed by perpendicular bending, and the distal end portion 15a has a terminal through hole 73 formed therein and having the same shape as that of the protrusion through hole 71. The second output terminal 15 is formed of an electrically conductive material such as stainless steel. The second output terminal 15 may be formed of a material (e.g., nickel or a nickel alloy) lower in electric resistance than the current collecting plate 9.

The distal end portion 15a of the second output terminal 15 is placed on the protrusion 67; a shaft portion 75a of the bolt 75 is inserted through the terminal through hole 73 and through the protrusion through hole 71; and the nut 77 is threadingly engaged with the shaft portion 75a. As a result, the protrusion 67 and the second output terminal 15 are fixed together, whereby the current collecting plate 9 and the second output terminal 15 are electrically connected.

Particularly, in the present embodiment 1, as shown in FIG. 8, an overlapping range between the protrusion 67 and the distal end portion 15a of the second output terminal 15 is specified.

More specifically, a region (including the protrusion through hole 71 and the terminal through hole 73) where the protrusion 67 and the second output terminal 15 are brought into contact with each other for electrical connection is defined as a connection region SR (the hatched region of FIG. 8).

The connection region SR is determined so as to be present between a first tangential line L1 tangential to the circumference of one through hole 10c and perpendicular to a line segment SB which connects the centroid of the one through hole 10c and the centroid of the other through hole 10d, and a second tangential line L2 tangential to the circumference of the other through hole 10d and perpendicular to the line segment SB.

That is, the connection region SR where the protrusion 67 and the second output terminal 15 are electrically connected is formed in a belt-like range between the first tangential line L1 tangential to the circumference of the one through hole 10c and the second tangential line L2 tangential to the circumference of the other through hole 10d; i.e., within a connectable range SKH between the parallel lines L1 and L2.

Also, at least one of the short sides of the second output terminal 15 (here, the distal end side of the distal end portion 15a, which is a short side of a rectangle) is disposed within the connectable range SKH.

Further, the entire connection region SR is disposed within the connectable range SKH.

Additionally, in plan view, the protrusion 67 is formed such that, in relation to the protruding direction, the proximal width gradually increases proximally as compared with the distal width. More specifically, the proximal opposite sides with respect to a width direction of the protrusion 67 are gently curved in an arc form so as to expand proximally such that the proximal width increases proximally from the distal width. The width direction is a direction perpendicular to the protruding direction of the protrusion 67 as viewed from the first direction.

d) Next, a method of manufacturing the fuel cell stack 1 will be described briefly.

### [Manufacturing process for members]

First, the two end plates 3 and 5, the current collecting plate 9, the interconnectors 19, the anode frames 27, the separators 25, and the electrically conductive plates 63 of the anode current collectors 37 were punched out from plate materials (plate materials having required thicknesses) of, for example, SUS430.

The cathode current collectors 33 were formed, by cutting, on the surface of one side of the interconnector 19.

Punching, etc., were performed on a mica sheet to manufacture the cathode insulating frames 23 and the end insulating plate 64.

Further, punching was performed on a mica sheet to manufacture the spacers 61; cuts were made into the electrically conductive plates 63; and the electrically conductive plates 63 were attached to the respective spacers 61, thereby manufacturing the anode current collectors 37.

### [Manufacturing process for single fuel cell 17]

The single fuel cells 17 were manufactured according to the usual method.

Specifically, first, in order to form the anodes 53, anode paste was prepared by use of, for example, yttria-stabilized zirconia (YSZ) powder, nickel oxide powder, and binder solution. By use of the anode paste, an anode green sheet was manufactured by a well-known doctor blade method.

In order to manufacture the solid electrolyte layers 51, solid electrolyte paste was prepared by use of, for example, YSZ powder and binder solution. By use of the solid electrolyte paste, a solid electrolyte green sheet was manufactured by the doctor blade method.

Next, the solid electrolyte green sheet was laminated on the anode green sheet. The resultant laminate was heated at a predetermined temperature for sintering, thereby yielding a sintered laminate.

In order to form the cathodes 55, cathode paste was prepared by use of, for example, La₁₋ₓSrₓCo_{1-y}Fe_{y}O₃ powder and binder solution.

Next, the cathode paste was applied by printing to the surface of the solid electrolyte layer 51 of the sintered laminate. Then, the printed cathode paste was fired at such a predetermined temperature as to avoid becoming dense, thereby forming the cathodes 55.

Thus, the single fuel cells 17 were completed. The separators 25 were fixed, by brazing, to the single fuel cells 17, respectively.

### [Manufacturing process for fuel cell stack 1]

Next, the above-mentioned members were stacked sequentially as shown in FIG. 2, thereby yielding a stacked body; the bolts 11 were inserted through the respective through holes 10 of the stacked body; and the nuts 12 were screwed to the bolts 11 and tightened, thereby unitarily fixing the stacked body through pressing.

Thus, the fuel cell stack 1 of the present embodiment 1 was completed.
e) Next, the effect of the present embodiment 1 will be described.

In the present embodiment 1, the connection region SR in which the protrusion 67 of the current collecting plate 9 and the second output terminal 15 are electrically connected is formed within a belt-like range (i.e., the connectable range SKH) between the first tangential line L1 tangential to the circumference of one through hole 10c and the second tangential line L2 tangential to the circumference of the other through hole 10d.

Therefore, since the flow of electricity (electric current) generated in the fuel cell stack 1 is unlikely to be obstructed by the through holes 10 (i.e., since electric resistance is low), electricity is easily supplied to the second output terminal 15 from the current collecting section 65 of the current collecting plate 9 through the protrusion 67. As a result, a voltage loss is small, thereby yielding a marked effect that the performance of the fuel cell stack 1 can be improved.

Further, since the protrusion 67 having the thus-determined connection region SR can be formed compact, there is an advantage that heat transfer from the stack body 20 in which the electricity generation units 7 are stacked can be restrained.

Also, in the present embodiment 1, since the short side of the distal end of the second output terminal 15 is disposed within the connectable range SKH, electric current flows easily from the current collecting section 65 to the periphery of the short side of the second output terminal 15 (accordingly, to the second output terminal 15) through the protrusion 67. Therefore, a voltage loss is small, whereby the performance of the fuel cell stack 1 can be improved.

Further, in the present embodiment 1, since the entire connection region SR is disposed within the connectable range SKH, electric current flows easily from the current collecting section 65 to the connection region SR of the protrusion 67. Therefore, a voltage loss is small, whereby the performance of the fuel cell stack 1 can be improved.

Additionally, in the present embodiment 1, since the protrusion 67 is formed such that, in plan view, its width gradually increases from the distal side with respect to the protruding direction toward the proximal side, electric current flows far more easily from the current collecting section 65 to the protrusion 67. Also, there is an advantage that the protrusion 67 is higher in strength on the proximal side and is less likely to break.

### Embodiment 2

Next, embodiment 2 will be described; however, the description of contents similar to those of the aforementioned embodiment 1 is omitted.

Since the present embodiment 2 differs from embodiment 1 in the structure of the current collecting plate, the different structure will be described. Notably, members similar to those of embodiment 1 are denoted by the same reference numerals as those of embodiment 1 (the same also applies to the following description).

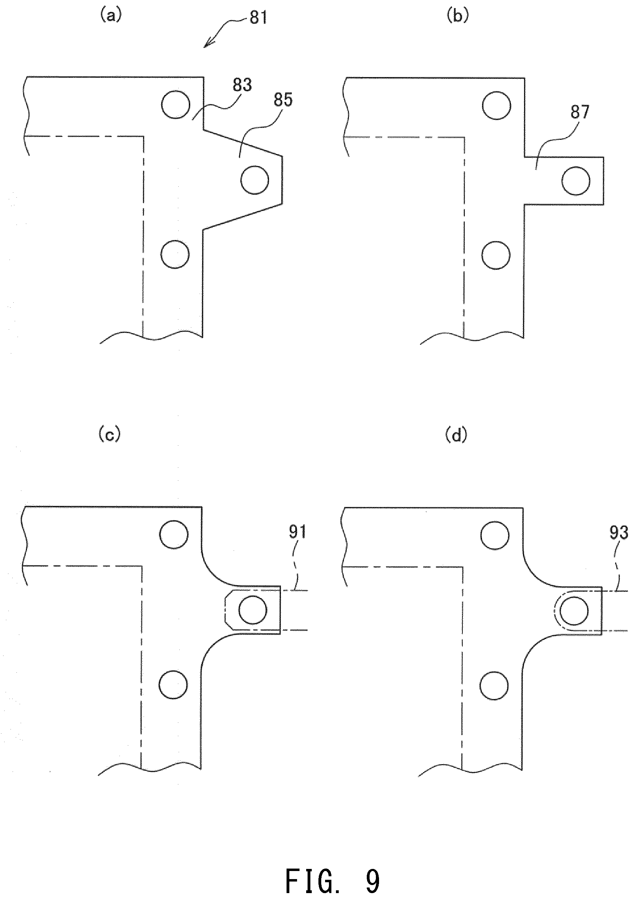

Specifically, in the present embodiment 2, as shown in FIG. 9(a), a current collecting plate 81 includes a current collecting section 83 and a protrusion 85. The protrusion 85 has a trapezoidal planar shape. That is, the protrusion 85 is formed such that the width increases gradually from the distal side toward the proximal side.

The present embodiment 2 also yields an effect similar to that of the aforementioned embodiment 1.

Also, as shown in FIG. 9(b) which shows a modification of embodiment 2, a protrusion 87 may have a rectangular planar shape such that the width is fixed from the distal side toward the proximal side.

### Embodiment 3

Next, embodiment 3 will be described; however, the description of contents similar to those of the aforementioned embodiment 1 is omitted.

Since the present embodiment 3 differs from embodiment 1 in the structure of the second output terminal, the different structure will be described.

Specifically, in the present embodiment 3, as shown in FIG. 9(c), a second output terminal 91 has a trapezoidal distal end portion.

The present embodiment 3 also yields an effect similar to that of the aforementioned embodiment 1.

Also, as shown in FIG. 9(d) which shows a modification of embodiment 3, a second output terminal 93 may have a distal end portion curved in a semicircular shape or the like.

### Embodiment 4

Next, embodiment 4 will be described; however, the description of contents similar to those of the aforementioned embodiment 1 is omitted.

Since the present embodiment 4 differs from embodiment 1 in the planar shape of the through holes, the different shape will be described.

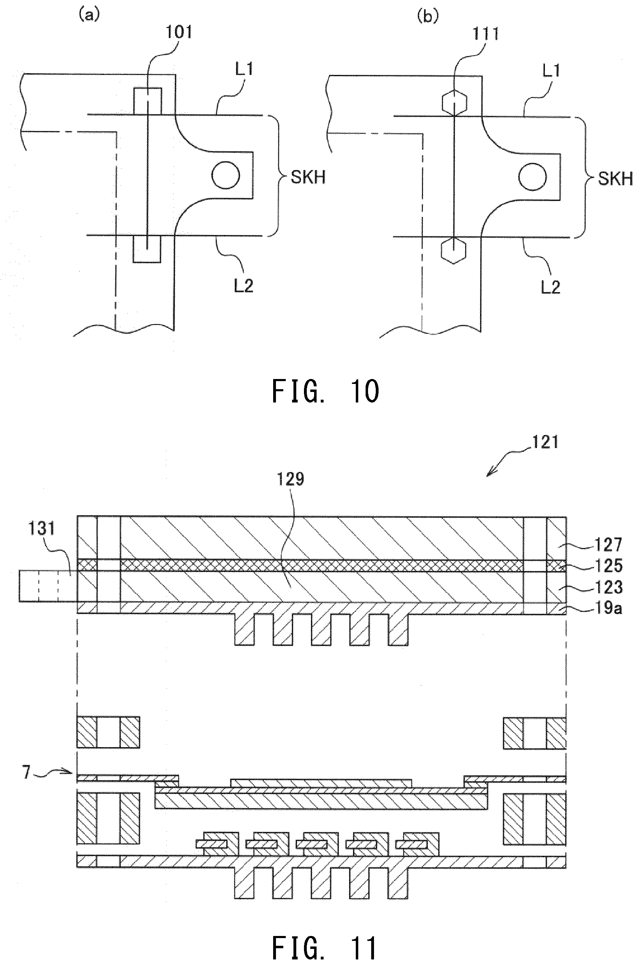

Specifically, in the present embodiment 4, as shown in FIG. 10(a), through holes 101 have a quadrate (square) planar shape.

Even in the case of employment of the square through holes 101, similar to the aforementioned embodiment 1, the belt-like connectable range SKH can be defined by the first tangential line L1 and the second tangential line L1.

Also, as shown in FIG. 10(b) which shows a modification of embodiment 4, through holes 111 may have another polygonal planar shape (e.g., hexagonal shape).

Although unillustrated, even in the case of employment of through holes having a curved planar shape, the connectable range SKH can be defined similarly.

### Embodiment 5

Next, embodiment 5 will be described; however, the description of contents similar to those of the aforementioned embodiment 1 is omitted.

In the present embodiment 5, a structure on the second end plate side is similar to a structure on the first end plate side of embodiment 1.

Specifically, in the present embodiment 5, as shown in FIG. 11, in the top electricity generation unit 7 of a fuel cell stack 121, a current collecting plate 123 similar to the current collecting plate of embodiment 1 is disposed on the upper surface of the upper interconnector 19a.

Further, an end insulating plate 125 similar to the end insulating plate of embodiment 1 is disposed on the upper surface of the current collecting plate 123, and a first end plate 127 similar to the end plate of embodiment 1 is disposed on the upper surface of the end insulating plate 125.

Similar to embodiment 1, the current collecting plate 123 includes a quadrate (in plan view) current collecting section 129 and a protrusion 131 protruding from the periphery of the current collecting section 129.

Although unillustrated, the first output terminal 13 is connected to the protrusion 131 similarly to the second output terminal 15.

### Embodiment 6

Next, embodiment 6 will be described; however, the description of contents similar to those of the aforementioned embodiment 1 is omitted.

Since the present embodiment 6 differs from embodiment 1 in the structure of an end portion with respect to the stacking direction of the fuel cell stack, the different end portion structure will be described.

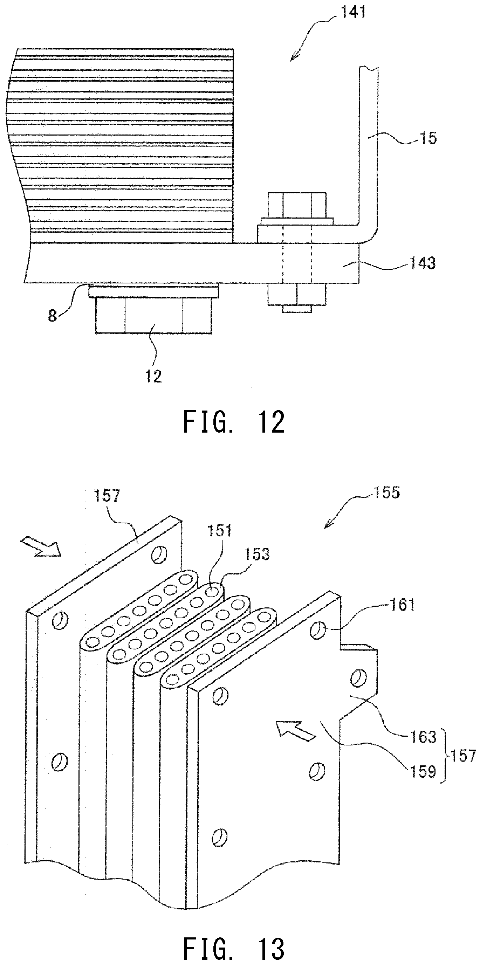

Specifically, in the present embodiment 6, as shown in FIG. 12, the second end plate of embodiment 1 is eliminated from the bottom of a fuel cell stack 141, and a current collecting plate 143 is used as the second end plate.

In this case, preferably, the current collecting plate 143 has such a thickness as to have sufficient strength for serving as the second end plate (e.g., a thickness of the second end plate or greater).

Similar to embodiment 1, in the present embodiment 6, the current collecting plate 143 is fixed directly by the bolts 11 and the nuts 12 with the insulators 8 intervening between the nuts 12 and the current collecting plate 143.

Also, the first end plate of embodiment 1 may be eliminated as a modification of the present embodiment 6. Specifically, the upper interconnector 19a of the top electricity generation unit 7 of FIG. 2 may be used as the first end plate, and the first output terminal 13 may be attached to the interconnector 19a. In this case, preferably, the interconnector 19a has such a thickness as to have sufficient strength (e.g., a thickness of the first end plate or greater).

Similarly, in the aforementioned embodiment 5, the first end plate and the end insulating plate may be eliminated, and the top interconnector may be used as the first end plate.

The present invention has been described with reference to the embodiments. However, the present invention is not limited thereto, but may be embodied in various other forms.

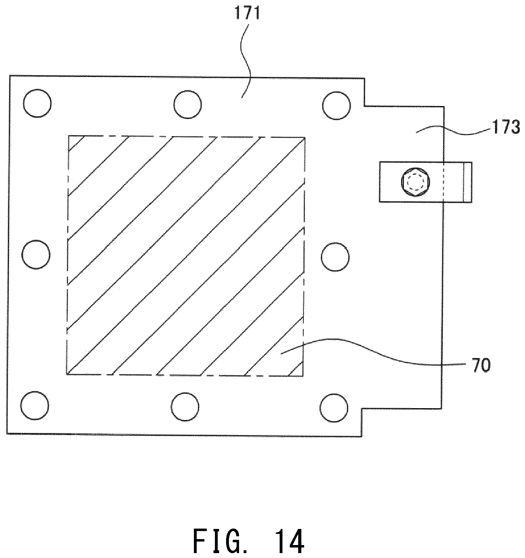

(1) For example, the present invention can also be applied to a fuel cell stack 155 in which, in place of the plate-like electricity generation units of the above embodiments, a plurality of flat tubular electricity generation units 153 each having internal gas flow channels 151 are disposed in array as shown in FIG. 13.
   Specifically, a fuel cell stack 155 is configured such that a plurality of the flat tubular electricity generation units 153 are disposed in array in their thickness direction while end plates 157 serving the current collecting plates are disposed at opposite ends with respect to the direction of disposition. In this case, similar to the above embodiments, each end plate 157 may have a protrusion 163 protruding outward from a current collecting section 159 (at a position between through holes 161).
(2) Also, as shown in FIG. 14, in plan view, a current collecting plate 171 may have a protrusion 173 which is greater in width (a vertical dimension in FIG. 14) than the protrusion 67 of embodiment 1. For example, the width of the protrusion 173 may be narrower than that of the current collecting plate 171 and wider than that of the current collecting area 70.
(3) Also, preferably, the protrusion is entirely present within the connectable range. However, a portion of the protrusion may be present outside the connectable range. For example, in the case where the proximal width of the protrusion is wide, a proximal portion of the protrusion may expand beyond the connectable range.
(4) In the above embodiments, the interconnector and the cathode current collectors are formed integrally. However, the interconnector and the cathode current collectors may be formed as separate members, and the members may be joined by use of a brazing material or the like. For example, current collectors in the form of blocks, or elongated current collectors may be joined to the surface of one side of a flat-plate-like interconnector.
(5) Other than the anode current collector of the above embodiments, the anode current collector may be a known one formed of a buckling-free porous metal material or the like.
(6) The structure of the above embodiments may be combined as appropriate.

### DESCRIPTION OF REFERENCE NUMERALS

1, 121, 141, 155: fuel cell stack
3, 5, 127, 157: end plate
7, 153: electricity generation unit
9, 81, 123, 143, 171: current collecting plate
10, 10c, 10d, 101, 111, 161: through hole
17: single fuel cell
13, 15, 91, 93: output terminal
19, 19a, 19b, 125: interconnector
33: cathode current collector
37: anode current collector
51: solid electrolyte layer
53: anode
55: cathode
65, 83, 129, 159: current collecting section
67, 85, 87, 131, 163, 173: protrusion
70: current collecting area
SR: connection region

## Claims

1. A fuel cell stack comprising:
an electricity generation unit including a single fuel cell having an anode, a cathode, and a solid electrolyte, and
a current collecting plate for collecting, through a current collector, electricity generated by the single fuel cell,
a plurality of the electricity generation units being disposed continuously, and the current collecting plate being disposed in a first direction in which the electricity generation units are continuous with one another,
the fuel cell stack being **characterized in that** as viewed from the first direction,
the current collecting plate has a current collecting section disposed in a region in which the electricity generation units lie on top of one another, and a protrusion protruding from the current collecting section;
the current collecting section has a current collecting area in which the current collector is disposed, and a plurality of through holes including a first through hole and a second through hole located adjacent to each other;
the protrusion has a connection region to which an output terminal for outputting electricity generated in the fuel cell stack from the fuel cell stack is connected; and
the connection region is present between a first tangential line tangential to a circumference of the first through hole and perpendicular to a line segment which connects a centroid of the first through hole and a centroid of the second through hole, and a second tangential line tangential to a circumference of the second through hole and perpendicular to the line segment.

2. A fuel cell stack according to claim 1, wherein the output terminal is formed of a member lower in electric resistance than the current collecting plate.

3. A fuel cell stack according to claim 1 or 2, wherein as viewed from the first direction, the entire connection region is disposed between the first tangential line and the second tangential line.

4. A fuel cell stack according to any one of claims 1 to 3, wherein as viewed from the first direction, a width of the protrusion on a proximal side with respect to a protruding direction is greater than a width of the protrusion on a distal side with respect to the protruding direction.

5. A fuel cell stack according to claim 4, wherein as viewed from the first direction, the width of the protrusion increases gradually toward the proximal side.
